# EUROPEAN PATENT SPECIFICATION

(11) **EP 1 395 076 B1**
(45) Date of publication and mention of the grant of the patent: **11.10.2006**
(21) Application number: 03008492.5
(22) Date of filing: 11.04.2003
(51) Int. Cl.: H04Q 7/38, H04L 12/28

(54) **Method for selecting an access system and for transmitting data via a WLAN/mobile phone interworking system**
Verfahren zur Auswahl eines Zugangsnetzes und zur Datenübertragung über ein WLAN/ Mobilfunk Interworking System
Procédé pour sélectionner un réseau d'accès et pour transmettre des données dans un système d'interconnection WLAN/cellulaire

(30) Priority: 30.08.2002 KR 2002051716
(43) Date of publication of application: 03.03.2004
(73) Proprietor: SK Telecom Co., Ltd., Jongro-ku, Seoul 110-110 (KR)
(72) Inventor: Park, Seong-Soo, Gangseo-gu, Seoul (KR); Lee, Dong-Hahk, Bundang-gu, Seongnam-si, Gyeonggi-do (KR)
(74) Representative: Schneider, Henry

(56) References cited:
- US-A- 5 943 333
- US-A1- 2001 024 953
- US-A1- 2002 085 516
- US-B1- 6 243 581
- M.CAPPIELLO, A.FLORIS, L. VELTRI: "Mobility amongst Heterogeneous Networks with AAA Support" IEEE 2002, 28 April 2002 (2002-04-28), pages 2064-2069, XP010589849

## Description

The present invention relates to a method for selecting a system and transmitting data for a WLAN/mobile phone network interworking service, and in particular to a method for selecting a data transmission system and transmitting data through the system which can provide an interworking service in an environment where a WLAN which provides a high speed wireless internet access service based on hot spots and a mobile phone network which provides a national communication service coexist.

Recently, demands of users for internet access have considerably increased and expanded into wireless sections due to huge distributions of a very high speed internet service. Accordingly, communication providers in the country or abroad attempt to provide the very high speed internet service by using a WLAN.

However, a service area of one access point of the WLAN exists within a 100m-radius, which is very different from a few hundreds m to a few Km of a mobile phone network. Therefore, the WLAN cannot provide mobility and service coverage as in the mobile phone network.

It is thus necessary to provide an interworking service which uses the WLAN in the area where a lot of users demand the very high speed wireless internet service, and the mobile phone network in the other areas.

For this, the WLAN and mobile phone network services need to be interworked in different systems and frequencies.

Prior art related to the method for selecting a system and roaming between two different wireless network systems includes:
(1) U.S. Pat. No. 6,243,581 discloses a mobile computer system capable of seamless roaming between wireless communication networks includes data processing resources for executing software, a plurality of wireless interfaces that supports simultaneous wireless connections with first and second wireless communication networks, and a network access arbitrator that routes data communicated between the software executed by the data processing resources and the first and second wireless communication networks. To permit seamless roaming, the network access arbitrator routes the data to the first wireless communication network via a first wireless interface and then seamlessly reroutes the data to a second wireless communication network via a second wireless interface. According to one embodiment, the network access arbitrator reroutes the data in response to the data bandwidths of the connections with the first and second wireless communication networks.
(2) U.S. Pat. Pub. No. 2001/0024953 discloses a method for supporting mobility in a wireless telecommunication system which comprises at least one terminal, an access point currently serving the terminal and a plurality of other access points. The access points may be grouped into networks and the terminal is arranged to collect information about available access points. The network names of the available access points are checked by the terminal. The first access point with the best connection attributes of the available access points with the same network name as the currently serving access point is selected. The second access point with the best connection attributes of the available access points with a different network name than the currently serving access point is also selected. One or more connection attributes of the first access point and the second access point are compared. The connection to the second access point is established if the differences between the compared connection attributes fulfil pre-determined conditions.
(3) U.S. Pat. Pub. No. 2002/0085516 discloses A Mobile Station (MS) is able to vertically roam in either direction between two different network, i.e. WWAN and WLAN. The MS is equipped with a dual mode Radio for WWAN and WLAN transmissions. The WLAN Radio is linked to a WLAN Enterprise Gateway Controller (EGC) via a first air link and the WWAN Radio is linked to a WWAN Base Transceiver Station (BTS) via a second air link. The EGC is connected to a Mobile Switching Center (MSC) which is in turn connected to the BTS. An outgoing VoIP call from the WLAN Radio to a remote party on the WWAN will transition or seamlessly switch over to a WWAN connection when the MS detects packet error rates, frequent scale back or consistent signal degradation. Upon such conditions, the WLAN Radio requests the EGC to request an Explicit Call Transfer via the MSC to the MS integrated WWAN Radio portion which automatically accepts the call based on referenced information stored in the user's subscriber identification module (SIM). Once the WWAN Radio is confirmed connected to the remote party on the WWAN, the WLAN Radio drops the WLAN connection. An incoming call between the MS and a remote user via the WWAN will transition to the WLAN Radio when the MS enters WLAN coverage. The MS issues an ECT to the WLAN. After user verification by the WLAN Radio and the EGC signals acceptance of the call, the WWAN Radio connection is dropped and the call is now established between the WLAN Radio and the remote party on the WWAN.

It is the object of the present invention to provide an improved method for selecting a data transmission system and transmitting data through the system which can provide an interworking service in an environment where a WLAN which provides a high speed wireless internet access service based on hot spots and a mobile phone network which provides a national communication service coexist.

The object is solved by the subject matter of the independent claim. Preferred embodiment of the present invention are defined by the dependent claims.

According to an embodiment of the present invention, there is provided a method for selecting a system and transmitting data for a WLAN/mobile phone network interworking service in a WLAN/mobile phone network interworking system, including: a signal measuring step for setting up a service set ID list of a WLAN in an access point in order for a terminal to allow access, and measuring signal strength for the WLAN access; an access deciding step for selecting an access system based on the signal strength measured in the signal measuring step; a WLAN performing step for periodically measuring signal strength of a WLAN channel satisfying the access allowable service set ID list, and accessing the corresponding WLAN channel or a mobile phone network according to the existence or absence of the WLAN channel guaranteeing signal quality for the WLAN access, when the WLAN access is confirmed in the access deciding step; and a mobile phone network performing step for periodically measuring signal strength of the WLAN channel satisfying the access allowable service set ID list, and converting the mobile phone network access into the WLAN access according to sufficient signal strength for the access, when the mobile phone network access is confirmed in the access deciding step.

### BRIEF DESCRIPTION OF THE DRAWINGS

The present invention will become better understood with reference to the accompanying drawings which are given only by way of illustration and thus are not limitative of the present invention, wherein:
Fig. 1 is a structure view illustrating a WLAN/mobile phone network interworking system which the present invention can be applied to;
Fig. 2 is a structure view illustrating cells of a mobile phone network and a WLAN used for the present invention;
Fig. 3 is a flowchart showing a procedure of selecting a system in a mobile terminal in accordance with the present invention;
Fig. 4 is an exemplary view illustrating a procedure of interworking data services during a roaming operation from the WLAN to the mobile phone network in accordance with the present invention; and
Fig. 5 is an exemplary view illustrating a procedure of interworking data services during a roaming operation from the mobile phone network to the WLAN in accordance with the present invention.

### DETAILED DESCRIPTION OF THE PREFERRED EMBODIMENTS

A method for selecting a system and transmitting data for a WLAN/mobile phone network interworking service in accordance with a preferred embodiment of the present invention will now be described in detail with reference to the accompanying drawings.

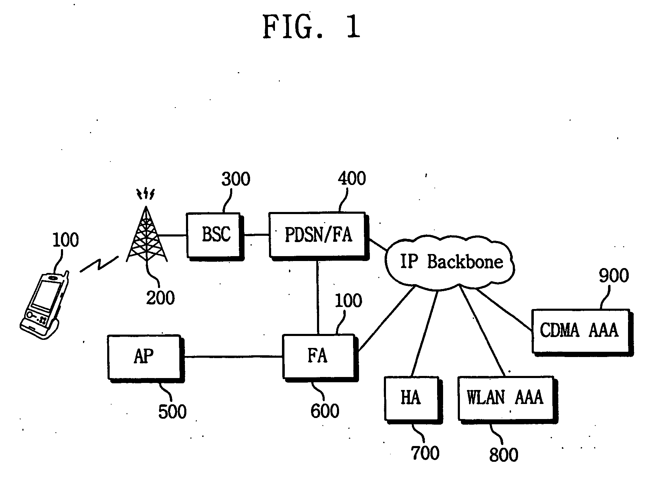

Fig. 1 is a structure view illustrating a WLAN/mobile phone network interworking system which the present invention can be applied to.

Referring to Fig. 1, a WLAN includes a mobile terminal 100 which a network interface card (NIC) is mounted on, an access point (AP) 500 and an authentication server (AAA) 800, and a foreign agent (FA) 600 for mobile IP support is positioned between the AAA 800 and the AP 500.

A mobile phone network includes a mobile terminal 100, a base station (BTS) 200, a base station controller (BSC) 300, a packet data service node (PSDN) 400 for processing data, and an authentication server (AAA) 900.

The operation of the present invention will now be described with reference to the accompanying drawings.

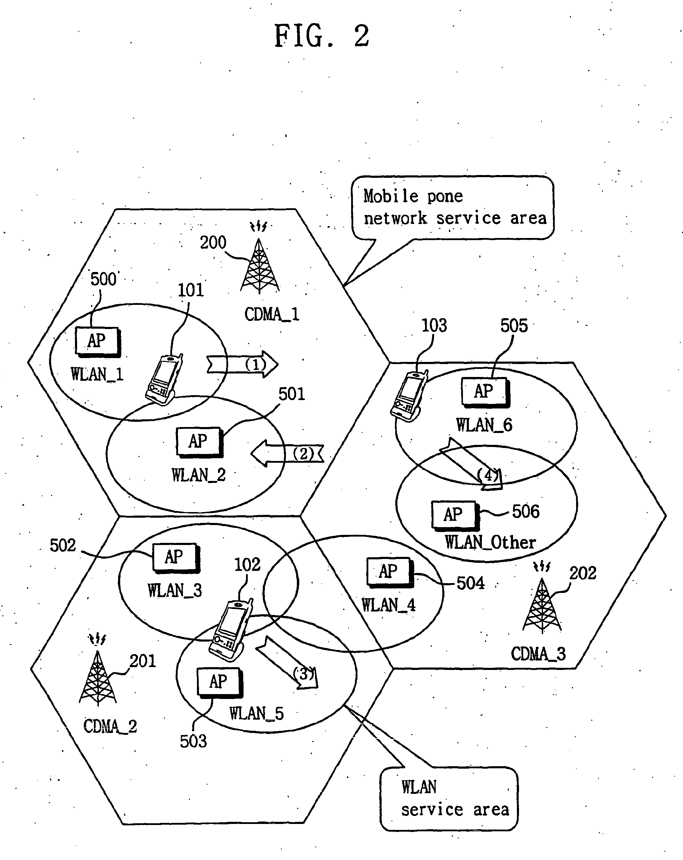

Fig. 2 is a structure view illustrating cells of the mobile phone network and the WLAN used for the present invention.

As illustrated in Fig. 2, a service coverage of the BTS of the mobile phone network is larger than that of the AP of the WLAN. Therefore, service interworking between the WLAN and the mobile phone network (arrows 1 and 2), service interworking between the WLAN and the WLAN (arrow 3), and service interworking when an AP for WLAN of another provider exists (arrow 4) must be all considered to interwork the WLAN and mobile phone network services.

In the case of service interworking between the WLAN and the mobile phone network, the access system must be decided between the mobile phone network and the WLAN. That is, WLAN signal strength is periodically measured, and then the access system is selected according to the measured signal strength. As indicated by arrow 1, a mobile terminal 101 transmits/receives data to/from the WLAN and measures WLAN signal strength. When the measured signal strength is smaller than a reference value, the mobile terminal 101 transmits/receives data to/from the mobile phone network.

In the case of service interworking between the WLAN and the mobile phone network (arrow 2), the mobile terminal 101 transmits/receives data to/from the mobile phone network and periodically measures WLAN signal strength. When the measured signal strength is greater than a reference value, the mobile terminal 101 transmits/receives data to/from the WLAN.

In addition, in the case of service interworking between the WLAN and the WLAN (arrow 3), a WLAN cell (WLAN_5) 503 is adjacent to a WLAN cell (WLAN_3) 502 which a mobile terminal 102 is located in. When signal strength of the current WLAN cell is smaller than a reference value, the mobile terminal 102 detects signal strength of the adjacent WLAN cell having an access allowable service set ID (SSID), and selects an optimal WLAN cell for data transmission and reception.

On the other hand, service interworking when the AP for WLAN of another provider exists (arrow 4) is different from the service interworking between the WLAN and the WLAN (arrow 3) merely in that the adjacent WLAN cell is a WLAN cell of an individual user or another provider. Here, if WLAN signal strength of a current WLAN cell (WLAN_6) 505 decreases, a mobile terminal 103 transmits/receives data to/from the mobile phone network.

In order to satisfy the aforementioned conditions, the SSIDs used as system identifiers in the WLAN must be set up in the AP to be distinguished from other providers or individual users. That is, when signal strength from the AP of the current WLAN cell decreases, the mobile terminal detects signals of the AP of the adjacent WLAN cell. Here, the mobile terminal measures signal strength only of the AP having the access allowable SSID. If the mobile terminal does not receive the WLAN signal having the access allowable SSID, it attempts to access the mobile phone network.

The process of deciding a communication mode based on WLAN signal strength will now be explained in more detail.

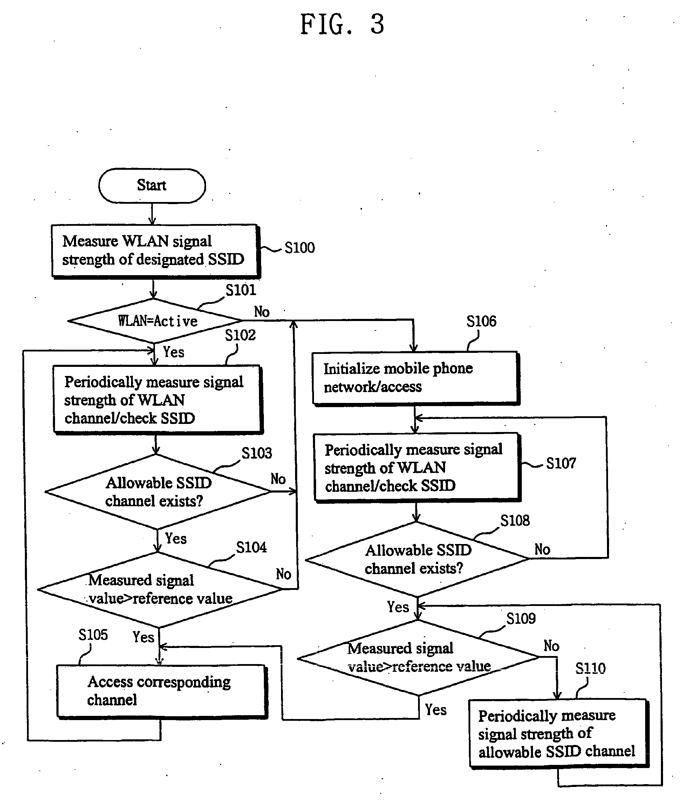

Fig. 3 is a flowchart showing a procedure of selecting the system in the mobile terminal in accordance with the present invention. As depicted in Fig. 3, the mobile terminal must store the SSID list of the WLAN to allow access. The mobile terminal measures signal strength for the WLAN access in an initial stage, periodically measures signal strength of a WLAN channel satisfying the access allowable SSID list (S100), and selects an access system according to the signal strength measured in S100.

In order to decide the access system, the mobile terminal confirms whether the WLAN is in an active state (S101). If the WLAN is in the active state, the mobile terminal goes to S102, and if not, the mobile terminal goes to S106.

When the WLAN is in the active state in S101, the mobile terminal periodically measures signal strength of the current channel in the WLAN communication state. When the measured value is smaller than a reference value, the mobile terminal measures signal strength of other WLAN channels and confirms the SSID (S102).

The mobile terminal confirms whether channels having the access allowable SSID exist among the channels having values over the reference value in S102 (S103). If such channels exist in S103, the mobile terminal confirms whether the measured signal value is greater than a previously-set reference value in order to extract the channel having the largest signal strength among the channels (S104). When the measured signal value is over the reference value in S104, the mobile terminal accesses the AP of the corresponding channel (S105).

When the WLAN is not in the active state in S101, the mobile terminal initializes and accesses the mobile phone network (S106), periodically measures signal strength of the WLAN channel and confirms the SSID (S107). The mobile terminal confirms whether channels having the access allowable SSID exist (S108). If such channels exist, the mobile terminal confirms whether the measured signal value is greater than a reference value (S109)

When the measured signal value is greater than the reference value in S109, the mobile terminal accesses the corresponding WLAN channel (S105), and when it is smaller than the reference value, the mobile terminal periodically measures signal strength of the other WLAN channels having the access allowable SSID (S110), and repeats S109 based on the measured result.

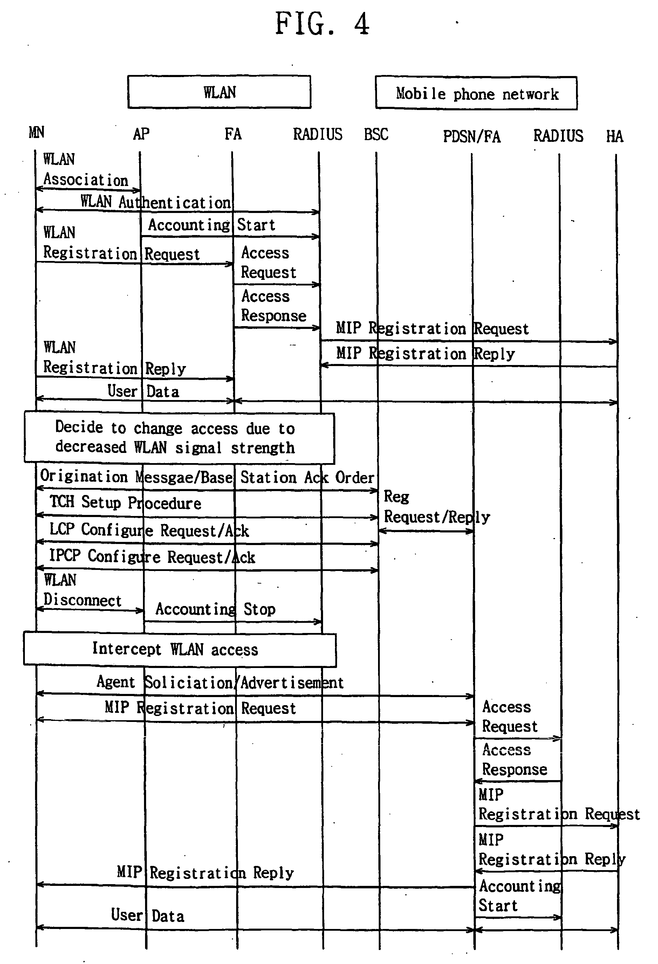

Fig. 4 is an exemplary view illustrating a procedure of interworking data services during a roaming operation from the WLAN to the mobile phone network in accordance with the present invention.

Referring to Fig. 4, when the mobile terminal 100 maintaining the WLAN access state performs mobile IP registration, the FA 600 for WLAN performs mobile IP authentication for RADIUS (Remote Authentication Dial-In User Services) and registration for a home agent (HA) 700.

When the mobile IP registration is finished, the mobile terminal 100 transmits and receives data through the HA 700 and the FA 600. The mobile terminal 100 periodically measures WLAN signal strength during the data communication using the WLAN. When the measured signal strength is smaller than a reference value, the mobile terminal 100 attempts to change the access. That is, when signal strength of the AP having the access allowable SSID is greater than the reference value, the mobile terminal 100 changes the AP for the WLAN access. Here, when the previous AP is positioned in the same FA area as the new AP, an additional mobile IP registration procedure is not necessary.

If an adjacent AP does not exist, the mobile terminal 100 starts a mobile phone network access procedure. The data transmission/reception is continuously performed through the WLAN until the mobile IP of the mobile phone network starts to operate. When a mobile IP registration procedure starts in the mobile terminal 100 through the mobile phone network, the data transmission/reception using the WLAN is intercepted. When the mobile IP registration procedure is finished, the data transmission/reception is performed through the mobile phone network.

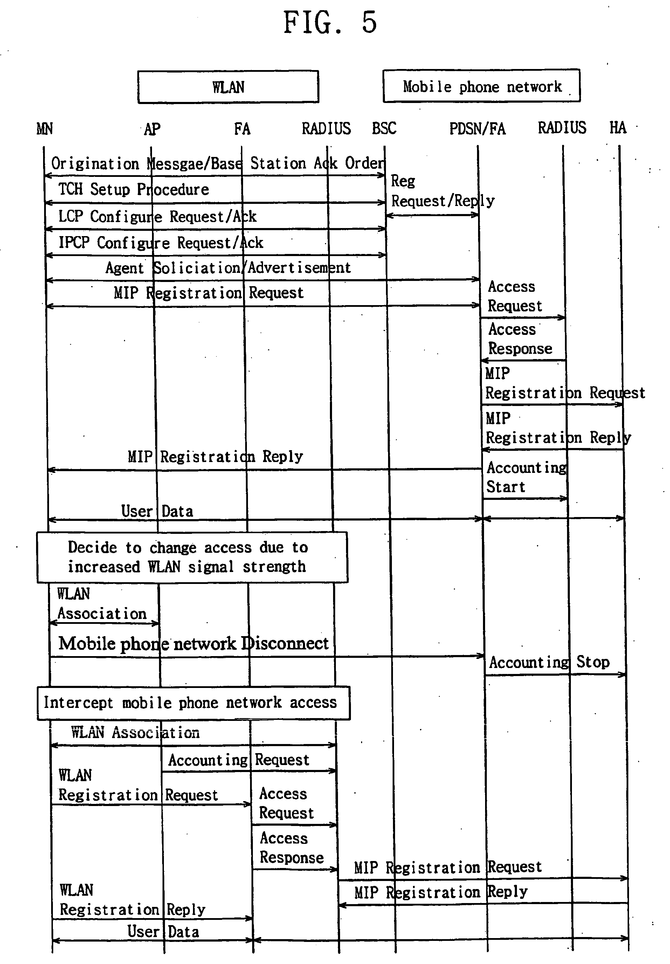

Fig. 5 is an exemplary view illustrating a procedure of interworking data services during a roaming operation from the mobile phone network to the WLAN in accordance with the present invention.

As shown in Fig. 5,the mobile terminal 100 transmits/receives data through the mobile phone network and periodically measures WLAN signal strength. When signal strength of the AP having the access allowable SSID is greater than a reference value, the mobile terminal 100 accesses the corresponding AP and intercepts the access to the mobile phone network.

Thereafter, when a mobile IP registration procedure using the WLAN is finished, the data transmission/reception is performed through the HA 700 and the FA 600 for WLAN.

As discussed earlier, in accordance with the present invention, the method for selecting the system and transmitting data for the WLAN/mobile phone network interworking service selects the data transmission system and transmits data through the system to provide the interworking service in the environment where the WLAN which provides the high speed wireless internet access service based on hot spots and the mobile phone network which provides the national communication service coexist, thereby efficiently interworking services between the WLAN and the mobile phone network. As a result, the wireless internet service can be facilitated.

## Claims

1. A method for selecting a system and transmitting data for a WLAN/mobile phone network interworking system comprising
a setup step for setting up at least one WLAN service set ID, different from that of other WLAN service providers or individual users, in at least one access point (500) and setting up at least one access allowable service set ID in a terminal (100);
a signal measuring step (S100) for measuring WLAN channel signal strength of at least one access point (500) having the access allowable service set ID for the purpose of selectively determining an initial system for the terminal (100) to access;
an initial access deciding step (S101) for selecting either mobile phone network or WLAN based on the signal strength measured in the signal measuring step;
an access changing step (S105, S106) for accessing either network in accordance with the selection in the signal measuring step, measuring WLAN signal strength of at least one access point (500) having the access allowable service set ID at predetermined periods while communicating and determining whether or not to change the access system based on the measurement result, and changing the access system using Mobile IP when the access system needs to be changed in accordance with the determination,
**characterized in that**
the selection in the initial access deciding step (S101) and the determination in the access changing step (S105, S106) comprise:
comparing the WLAN signal strengths of the WLAN access points (500) which have the same service set IDs as stored in the terminal (100) for the predetermined duration or at the predetermined frequency,
selecting the WLAN access point (500) having the highest signal strength measured if this highest value is greater than a predetermined reference value and
selecting the mobile phone network if this highest value is less than the predetermined reference value.

2. The method according to claim 1,
**characterized in that** in the signal measuring step, the terminal measures only the WLAN channel signal strength of the WLAN access points which have the same service set IDs as stored in the terminal for the predetermined duration or at the predetermined frequency repeatedly, and selects the WLAN access point having the highest value of the signal strength measured.

3. The method according to claim 1,
**characterized in that** the access changing step comprises:
a first step for measuring the signal strength of the WLAN channel through which the terminal is currently communicating at the predetermined periods;
a second step for measuring the signal strength of other WLAN channels corresponding to the access allowable service set ID, stored in the terminal, when the value measured in the first step is less than the predetermined reference value;
a third step for selecting the channels having the highest signal strength value measured in the second step and switching over to the corresponding access point when the measured value is over the predetermined reference value.

4. The method according to claim 1,
**characterized in that** the access changing step comprises:
a first step for measuring the signal strength of the WLAN channel through which the terminal is currently communicating at the predetermined periods;
a second step for measuring the signal strength of other WLAN channels corresponding to the access allowable service set ID, stored in the terminal, when the value measured in the first step is less than the predetermined reference value;
a third step for selecting the channels having the highest signal strength value measured in the second step and switching over to the mobile phone network when the measured value is less than the predetermined reference value;
a fourth step for communicating via the home agent and the foreign agent in the mobile phone network after the mobile IP registration through the mobile phone network is completed and disconnecting the link with WLAN.

5. The method according to claim 1,
**characterized in that** the access changing step comprises:
a first step for measuring the signal strength of the WLAN channels corresponding to the access allowable service set ID, stored in the terminal, at the predetermined periods while communicating through the mobile phone network;
a second step for selecting the channels having the highest signal strength value measured in the first step and switching over to the WLAN via the corresponding access point when the measured value is over the predetermined reference value;
a third step for communicating via the home agent and the foreign agent in the WLAN after the mobile IP registration through the WLAN is completed and disconnecting the link with the mobile phone network.

6. The method according to claim 1,
**characterized in that** the access changing step comprises:
a first step for measuring the signal strength of the WLAN channels corresponding to the access allowable service set ID, stored in the terminal, at the predetermined periods while communicating through the mobile phone network;
a second step for selecting the channels having the highest signal strength value measured in the first step and switching over to the WLAN via the corresponding access point when the measured value is over the predetermined reference value or returning to the first step when the measured value is less than the predetermined reference value.

7. The method according to claim 1,
**characterized in that** the access changing step comprises:
a first step for performing mobile IP registration in the WLAN access state, and performing registration for a home agent;
a second step for performing data transmission/reception through the home agent and a foreign agent after the mobile IP registration;
a third step for measuring the signal strength of the WLAN channel, through which the terminal is currently communicating, at the predetermined periods and measuring the signal strength of the adjacent WLAN channels corresponding to the access allowable service set ID, stored in the terminal, when the value measured is less than the predetermined reference value,
a fourth step for selecting the channels having the highest signal strength value measured and switching over to the corresponding access point when the measured value is over the predetermined reference value.

8. The method according to claim 7,
**characterized in that** the first step further comprises a step for performing mobile IP authentication for remote authentication dial-in user services.

9. The method according to claim 7,
**characterized in that** the fourth step does not perform an additional mobile IP registration procedure, when a previous access point and a new access point are located in the same foreign agent coverage.

10. The method according to claim 7,
**characterized in that** the third step comprises the steps of:
attempting to access the mobile phone network when an adjacent WLAN access point does not exist or all the adjacent WLAN access points have the signal strength values less than the predetermined reference value, and continuously performing the data transmission/reception through the WLAN until the mobile IP of the mobile phone network starts to operate; and
disconnecting the data transmission/reception using the WLAN when the mobile IP registration procedure is completed, and performing the data transmission/reception through the mobile phone network.

11. The method according to claim 1,
**characterized in that** in the access changing step, as for measuring the signal strength of the WLAN, the channels having the access allowable service set ID is selected first, and then the signal strength is measured about those selected channels at the predetermined periods and the access system is determined based on the measurement result.

12. The method according to claim 1,
**characterized in that** in the access changing step as for switching the access system from the WLAN to the mobile phone network, the WLAN signal strength value for starting to access the mobile phone network is set high enough in order that the WLAN access is not disconnected until the call is set up successfully in the mobile phone network.

13. The method according to claim 1,
**characterized in that** in the access changing step, as for switching the access system from the WLAN to the mobile phone network, the data transmission/reception is continuously performed through the WLAN until a mobile IP registration procedure is completed in the mobile phone network, to prevent data disconnection during the roaming service.

14. The method according to claim 1,
**characterized in that** in the access changing step, as for switching the access system from the mobile phone network to the WLAN, the link with the mobile phone network is disconnected after the mobile IP procedure in the WLAN is completed.

15. The method according to claim 1
**characterized in that** in the initial access deciding step, the terminal selects the WLAN as an initial system to access when the WLAN channel signal strength value, measured in the signal measuring step, is over the predetermined reference value.

16. The method according to claim 1,
**characterized in that** in the initial access deciding step, the terminal selects the mobile phone network as an initial system to access when no WLAN access point which has an access allowable service set ID exists or all the signal strength values by the WLAN access points are less than the predetermined reference value.

## Patentansprüche

1. Verfahren zur Auswahl eines Systems und zur Übertragung von Daten für ein WLAN/Mobilfunknetz-Zusammenarbeitssystem, umfassend
einen Einrichtungsschritt zur Einrichtung mindestens einer WLAN-Service-Set-Kennung, welche sich von der anderer WLAN-Dienstanbieter oder einzelner Benutzer unterscheidet, in mindestens einem Zugangspunkt (500) und zur Einrichtung mindestens einer zugangsberechtigten Service-Set-Kennung in einer Endstelle (100);
einen Signalmessungsschritt (S100) zur Messung der WLAN-Kanal-Signalstärke mindestens eines Zugangspunktes (500) mit der zugangsberechtigten Service-Set-Kennung zum Zweck der selektiven Bestimmung eines Systems, auf das die Endstelle (100) anfangs zugreift;
einen Schritt zur Entscheidung über den anfänglichen Zugang (S101) zur Auswahl zwischen Mobilfunknetz und WLAN auf Grundlage der in dem Signalmessungsschritt gemessenen Signalstärke;
einen Zugangswechselschritt (S105, S106) zum Zugriff auf eines der beiden Netzwerke gemäß der Auswahl in dem Signalmessungsschritt, zur Messung der WLAN-Signalstärke mindestens eines Zugangspunktes (500) mit der zugangsberechtigten Service-Set-Kennung in vorbestimmten Intervallen während der Kommunikation und der Bestimmung, ob auf Grundlage des Messergebnisses das Zugangssystem zu wechseln ist oder nicht, und zum Wechseln des Zugangssystems unter Verwendung von Mobile IP, falls das Zugangssystem gemäß der Bestimmung gewechselt werden muss,
**dadurch gekennzeichnet, dass**
die Auswahl in dem Schritt zur Entscheidung über den anfänglichen Zugang (S101) und die Bestimmung in dem Zugangswechselschritt (S105, S106) umfassen:
Vergleichen der WLAN-Signalstärken der WLAN-Zugangspunkte (500), welche dieselben Service-Set-Kennungen haben wie in der Endstelle (100) gespeichert, über die vorbestimmte Dauer oder mit der vorbestimmten Frequenz,
Auswählen des WLAN-Zugangspunktes (500) mit der höchsten gemessenen Signalstärke, falls dieser höchste Wert größer als ein vorbestimmter Referenzwert ist, und
Auswählen des Mobilfunknetzes, falls dieser höchste Wert kleiner als der vorbestimmte Referenzwert ist.

2. Verfahren nach Anspruch 1,
**dadurch gekennzeichnet, dass** in dem Signalmessungsschritt die Endstelle über die vorbestimmte Dauer oder mit der vorbestimmten Frequenz wiederholt nur die WLAN-Kanal-Signalstärke derjenigen WLAN-Zugangspunkte misst, welche dieselben Service-Set-Kennungen haben wie in der Endstelle gespeichert, und den WLAN-Zugangspunkt auswählt, der den höchsten Wert der gemessenen Signalstärke hat.

3. Verfahren nach Anspruch 1,
**dadurch gekennzeichnet, dass** der Zugangswechselschritt umfasst:
einen ersten Schritt zur Messung der Signalstärke des WLAN-Kanals, durch welchen die Endstelle aktuell kommuniziert, in den vorbestimmten Intervallen;
einen zweiten Schritt zur Messung der Signalstärke anderer WLAN-Kanäle, die der in der Endstelle gespeicherten zugangsberechtigten Service-Set-Kennung entsprechen, wenn der in dem ersten Schritt gemessene Wert kleiner als der vorbestimmte Referenzwert ist;
einen dritten Schritt zur Auswahl der Kanäle mit dem höchsten in dem zweiten Schritt gemessenen Signalstärkewert und zum Überwechseln zu dem entsprechenden Zugangspunkt, wenn der gemessene Wert über dem vorbestimmten Referenzwert liegt.

4. Verfahren nach Anspruch 1,
**dadurch gekennzeichnet, dass** der Zugangswechselschritt umfasst:
einen ersten Schritt zur Messung der Signalstärke des WLAN-Kanals, durch welchen die Endstelle aktuell kommuniziert, in den vorbestimmten Intervallen;
einen zweiten Schritt zur Messung der Signalstärke anderer WLAN-Kanäle, die der in der Endstelle gespeicherten zugangsberechtigten Service-Set-Kennung entsprechen, wenn der in dem ersten Schritt gemessene Wert kleiner als der vorbestimmte Referenzwert ist;
einen dritten Schritt zur Auswahl der Kanäle mit dem höchsten in dem zweiten Schritt gemessenen Signalstärkewert und zum Überwechseln zu dem Mobilfunknetz, wenn der gemessene Wert kleiner als der vorbestimmte Referenzwert ist;
einen vierten Schritt zur Kommunikation über den Heimatagenten und den Fremdagenten in dem Mobilfunknetz, nachdem die Mobile-IP-Registrierung durch das Mobilfunknetz abgeschlossen ist, und zur Trennung der Verbindung mit dem WLAN.

5. Verfahren nach Anspruch 1,
**dadurch gekennzeichnet, dass** der Zugangswechselschritt umfasst:
einen ersten Schritt zur Messung der Signalstärke der WLAN-Kanäle, die der in der Endstelle gespeicherten zugangsberechtigten Service-Set-Kennung entsprechen, in den vorbestimmten Intervallen während der Kommunikation durch das Mobilfunknetz;
einen zweiten Schritt zur Auswahl der Kanäle mit dem höchsten in dem ersten Schritt gemessenen Signalstärkewert und zum Überwechseln zu dem WLAN über den entsprechenden Zugangspunkt, wenn der gemessene Wert über dem vorbestimmten Referenzwert liegt;
einen dritten Schritt zur Kommunikation über den Heimatagenten und den Fremdagenten in dem WLAN, nachdem die Mobile-IP-Registrierung durch das WLAN abgeschlossen ist, und zur Trennung der Verbindung mit dem Mobilfunknetz.

6. Verfahren nach Anspruch 1,
**dadurch gekennzeichnet, dass** der Zugangswechselschritt umfasst:
einen ersten Schritt zur Messung der Signalstärke der WLAN-Kanäle, die der in der Endstelle gespeicherten zugangsberechtigten Service-Set-Kennung entsprechen, in den vorbestimmten Intervallen während der Kommunikation durch das Mobilfunknetz;
einen zweiten Schritt zur Auswahl der Kanäle mit dem höchsten in dem ersten Schritt gemessenen Signalstärkewert und zum Überwechseln zu dem WLAN über den entsprechenden Zugangspunkt, wenn der gemessene Wert über dem vorbestimmten Referenzwert liegt, oder zur Rückkehr zu dem ersten Schritt, wenn der gemessene Wert kleiner als der vorbestimmte Referenzwert ist.

7. Verfahren nach Anspruch 1,
**dadurch gekennzeichnet, dass** der Zugangswechselschritt umfasst:
einen ersten Schritt zur Durchführung einer Mobile-IP-Registrierung in dem WLAN-Zugangszustand, und zur Durchführung einer Registrierung für einen Heimatagenten;
einen zweiten Schritt zur Durchführung einer Datenübertragung/eines Datenempfangs durch den Heimatagenten und einen Fremdagenten nach der Mobile-IP-Registrierung;
einen dritten Schritt zur Messung der Signalstärke des WLAN-Kanals, durch welchen die Endstelle aktuell kommuniziert, in den vorbestimmten Intervallen, und zur Messung der Signalstärke der benachbarten WLAN-Kanäle, die der in der Endstelle gespeicherten zugangsberechtigten Service-Set-Kennung entsprechen, wenn der gemessene Wert kleiner als der vorbestimmte Referenzwert ist,
einen vierten Schritt zur Auswahl der Kanäle mit dem höchsten gemessenen Signalstärkewert und zum Überwechseln zu dem entsprechenden Zugangspunkt, wenn der gemessene Wert über dem vorbestimmten Referenzwert liegt.

8. Verfahren nach Anspruch 7,
**dadurch gekennzeichnet, dass** der erste Schritt ferner einen Schritt zur Durchführung einer Mobile-IP-Authentifizierung für Einwahlbenutzerdienste mit Fernauthentifizierung umfasst.

9. Verfahren nach Anspruch 7,
**dadurch gekennzeichnet, dass** der vierte Schritt keine zusätzliche Mobile-IP-Registrierungsprozedur durchführt, wenn der vorangehende Zugangspunkt und ein neuer Zugangspunkt sich in demselben Fremdagentengebiet befinden.

10. Verfahren nach Anspruch 7,
**dadurch gekennzeichnet, dass** der dritte Schritt die Schritte umfasst:
Versuch eines Zugriffs auf das Mobilfunknetz, wenn ein benachbarter WLAN-Zugangspunkt nicht existiert oder sämtliche benachbarte WLAN-Zugangspunkte Signalstärkewerte unterhalb des vorbestimmten Referenzwertes haben, und fortlaufende Durchführung der Datenübertragung/des Datenempfangs durch das WLAN, bis die Mobile IP des Mobilfunknetzes den Betrieb aufnimmt; und
Trennen der Datenübertragung/des Datenempfangs unter Verwendung des WLAN, wenn die Mobile-IP-Registrierungsprozedur abgeschlossen ist, und Durchführen der Datenübertragung/des Datenempfangs durch das Mobilfunknetz.

11. Verfahren nach Anspruch 1,
**dadurch gekennzeichnet, dass** in dem Zugangswechselschritt, wie bei der Messung der Signalstärke des WLAN, die Kanäle mit der zugangsberechtigten Service-Set-Kennung zuerst ausgewählt werden, und dann die Signalstärke in den vorbestimmten Intervallen über diese ausgewählten Kanäle gemessen wird, und das Zugangssystem auf der Grundlage des Messergebnisses bestimmt wird.

12. Verfahren nach Anspruch 1,
**dadurch gekennzeichnet, dass** in dem Zugangswechselschritt, wie beim Umschalten des Zugangssystems von dem WLAN auf das Mobilfunknetz, der WLAN-Signalstärkewert zur Einleitung des Zugriffs auf das Mobilfunknetz genügend hoch gewählt wird, dass der WLAN-Zugang nicht getrennt wird, bis der Ruf in dem Mobilfunknetz erfolgreich aufgebaut ist.

13. Verfahren nach Anspruch 1,
**dadurch gekennzeichnet, dass** in dem Zugangswechselschritt, wie beim Umschalten des Zugangssystems von dem WLAN auf das Mobilfunknetz, die Datenübertragung/der Datenempfang fortlaufend durch das WLAN durchgeführt wird, bis eine Mobile-IP-Registrierungsprozedur in dem Mobilfunknetz abgeschlossen ist, um Datentrennung während des Roaming-Dienstes zu verhindern.

14. Verfahren nach Anspruch 1,
**dadurch gekennzeichnet, dass** in dem Zugangswechselschritt, wie beim Umschalten des Zugangssystems von dem Mobilfunknetz auf das WLAN, die Verbindung mit dem Mobilfunknetz getrennt wird, nachdem die Mobile-IP-Prozedur in dem WLAN abgeschlossen ist.

15. Verfahren nach Anspruch 1,
**dadurch gekennzeichnet, dass** in dem Schritt zur Entscheidung über den anfänglichen Zugang die Endstelle das WLAN als ein System, auf das anfangs zugegriffen wird, auswählt, wenn der in dem Signalmessungsschritt gemessene WLAN-Kanal-Signalstärkewert über dem vorbestimmten Referenzwert liegt.

16. Verfahren nach Anspruch 1,
**dadurch gekennzeichnet, dass** in dem Schritt zur Entscheidung über den anfänglichen Zugang die Endstelle das Mobilfunknetz als ein System, auf das anfangs zugegriffen wird, auswählt, wenn kein WLAN-Zugangspunkt existiert, welcher eine zugangsberechtigte Service-Set-Kennung hat, oder alle Signalstärkewerte der WLAN-Zugangspunkte kleiner als der vorbestimmte Referenzwert sind.

## Revendications

1. Procédé pour sélectionner un système et transmettre des données pour un système d'interfonctionnement de réseau téléphonique mobile / réseau local sans fil comprenant :
une étape d'installation pour configurer au moins un identifiant de définition de service du réseau local sans fil, différent de celui des autres utilisateurs individuels ou fournisseurs de service de réseau sans fil, dans au moins un point d'accès (500) et
pour configurer au moins un identifiant de définition de service d'autorisation d'accès dans un terminal (100) ;
une étape de mesure de signal (S100) pour mesurer l'intensité du signal de canal du réseau local sans fil d'au moins un point d'accès (500) possédant l'identifiant de définition de service d'autorisation d'accès pour pouvoir déterminer de manière sélective l'accès à un système initial pour le terminal (100) ;
une étape de décision d'accès initial (S101) pour sélectionner un réseau téléphonique mobile ou un réseau local sans fil en fonction de l'intensité de signal mesurée lors de l'étape de mesure de signal ;
une étape de modification d'accès (S105, S106) pour accéder à l'un des réseaux selon la sélection lors de l'étape de mesure de signal, mesurer l'intensité de signal du réseau local sans fil d'au moins un point d'accès (500) possédant l'identifiant de définition de service d'autorisation d'accès à des périodes prédéterminées tout en communiquant et déterminant de changer ou non le système d'accès en fonction du résultat de la mesure, et de modifier le système d'accès en utilisant un mobile IP lorsque le système d'accès doit être changé en fonction de la détermination ;
**caractérisé en ce que**
la sélection dans l'étape de décision d'accès initial (S101) et la détermination dans l'étape de modification d'accès (S105, S106) comprend :
la comparaison des intensités des signaux du réseau local sans fil des points d'accès du réseau local sans fil (500) qui possèdent les mêmes identifiants de définition de service tels que stockés dans le terminal (100) pour la durée prédéterminée ou à la fréquence prédéterminée,
la sélection du point d'accès du réseau local sans fil (500) possédant la plus grande intensité de signal mesurée si cette valeur la plus élevée est supérieure à une valeur de référence prédéterminée et
la sélection du réseau téléphonique mobile si cette valeur la plus élevée est inférieure à la valeur de référence prédéterminée.

2. Procédé selon la revendication 1.
**caractérisé en ce que** lors de l'étape de mesure de signal, le terminal mesure seulement l'intensité du signal de canal du réseau local sans fil des points d'accès du réseau local sans fil possédant les mêmes identifiants de définition de service que ceux stockés dans le terminal pour la durée prédéterminée ou à la fréquence prédéterminée de manière répétée, et sélectionne le point d'accès du réseau local sans fil possédant la plus grande valeur d'intensité de signal mesurée.

3. Procédé selon la revendication 1,
**caractérisé en ce que** l'étape de modification d'accès comprend :
une première étape pour mesurer l'intensité de signal du canal de réseau sans fil par l'intermédiaire duquel le terminal est en cours de communication aux périodes prédéterminées ;
une deuxième étape pour mesurer l'intensité de signal d'autres canaux du réseau local sans fil correspondant à l'identifiant de définition de service d'autorisation d'accès, stocké dans le terminal, lorsque la valeur mesurée lors de la première étape est inférieure à la valeur de référence prédéterminée ;
une troisième étape pour sélectionner les canaux possédant la plus grande valeur d'intensité de signal mesurée lors de la deuxième étape et commuter vers le point d'accès correspondant lorsque la valeur mesurée est supérieure à la valeur de référence prédéterminée.

4. Procédé selon la revendication 1,
**caractérisé en ce que** l'étape de modification d'accès comprend :
une première étape pour mesurer l'intensité de signal du canal de réseau local sans fil par l'intermédiaire duquel le terminal est en cours de communication aux périodes prédéterminées ;
une deuxième étape pour mesurer l'intensité de signal d'autres canaux du réseau local sans fil correspondant à l'identifiant de définition de service d'autorisation d'accès, stocké dans le terminal, lorsque la valeur mesurée lors de la première étape est inférieure à la valeur de référence prédéterminée ;
une troisième étape pour sélectionner les canaux possédant la plus grande valeur d'intensité de signal mesurée lors de la deuxième étape et commuter vers le réseau téléphonique mobile lorsque la valeur mesurée est inférieure à la valeur de référence prédéterminée ;
une quatrième étape pour communiquer via l'agent local et l'agent distant dans le réseau téléphonique mobile après que l'enregistrement du mobile IP par l'intermédiaire du réseau téléphonique mobile est terminé et déconnecter la liaison avec le réseau local sans fil.

5. Procédé selon la revendication 1,
**caractérisé en ce que** l'étape de modification d'accès comprend :
une première étape pour mesurer l'intensité de signal des canaux du réseau local sans fil correspondant à l'identifiant de définition de service d'autorisation d'accès, stocké dans le terminal, aux périodes prédéterminées tout en communicant par l'intermédiaire du réseau téléphonique mobile ;
une deuxième étape pour sélectionner les canaux possédant la plus grande valeur d'intensité de signal mesurée lors de la première étape et commuter vers le réseau local sans fil via le point d'accès correspondant lorsque la valeur mesurée est supérieure à la valeur de référence prédéterminée ;
une troisième étape pour communiquer via l'agent local et l'agent distant dans le réseau local sans fil après que l'enregistrement du mobile IP par l'intermédiaire du réseau local sans fil est terminé et déconnecter la liaison avec le réseau téléphonique mobile.

6. Procédé selon la revendication 1,
**caractérisé en ce que** l'étape de modification d'accès comprend :
une première étape pour mesurer l'intensité de signal des canaux du réseau local sans fil correspondant à l'identifiant de définition de service d'autorisation d'accès, stocké dans le terminal, aux périodes prédéterminées pendant une communication par l'intermédiaire du réseau téléphonique mobile ;
une seconde étape pour sélectionner les canaux possédant la plus grande valeur d'intensité de signal mesurée lors de la première étape et commuter vers le réseau local sans fil via le point d'accès correspondant lorsque la valeur mesurée est supérieure à la valeur de référence prédéterminée ou revenir à la première étape lorsque la valeur mesurée est inférieure à la valeur de référence prédéterminée.

7. Procédé selon la revendication 1,
**caractérisé en ce que** l'étape de modification d'accès comprend :
une première étape pour effectuer l'enregistrement d'IP mobile dans l'état d'accès au réseau local sans fil, et réaliser l'enregistrement pour un agent local ;
une deuxième étape pour réaliser une transmission/réception des données par l'intermédiaire de l'agent local et un agent distant après l'enregistrement de l'IP mobile ;
une troisième étape pour mesurer l'intensité de signal du canal du réseau local sans fil, par l'intermédiaire duquel le terminal est en cours de communication, aux périodes prédéterminées et mesurer l'intensité de signal des canaux du réseau local sans fil adjacents correspondant à l'identifiant de définition de service d'autorisation d'accès, stocké dans le terminal, lorsque la valeur mesurée est inférieure à la valeur de référence prédéterminée,
une quatrième étape pour sélectionner les canaux possédant la plus grande valeur d'intensité de signal mesurée et commuter vers le point d'accès correspondant lorsque la valeur mesurée est supérieure à la valeur de référence prédéterminée.

8. Procédé selon la revendication 7,
**caractérisé en ce que** la première étape comprend en outre une étape pour réaliser l'authentification du mobile IP pour des services utilisateur d'accès entrant à authentification distante.

9. Procédé selon la revendication 7,
**caractérisé en ce que** la quatrième étape ne réalise pas une procédure supplémentaire d'enregistrement du mobile IP, lorsqu'un point d'accès précédent et un nouveau point d'accès sont localisés dans la même zone de couverture que celle de l'agent distant.

10. Procédé selon la revendication 7,
**caractérisé en ce que** la troisième étape comprend les étapes consistant à :
tenter d'accéder au réseau téléphonique mobile lorsqu'un point d'accès du réseau local sans fil adjacent n'existe pas ou que tous les points d'accès du réseau local sans fil adjacents possèdent des valeurs d'intensité de signal inférieures à la valeur de référence prédéterminée, et réaliser de manière continue la transmission/réception de données par l'intermédiaire du réseau local sans fil jusqu'à ce que le mobile IP du réseau téléphonique mobile commence à opérer ; et
déconnecter la transmission/réception de données en utilisant le réseau local sans fil lorsque la procédure d'enregistrement du mobile IP est terminée, et réaliser la transmission/réception de données par l'intermédiaire du réseau téléphonique mobile.

11. Procédé selon la revendication 1,
**caractérisé en ce que**, dans l'étape de modification d'accès, pour mesurer l'intensité de signal du réseau local sans fil, les canaux possédant l'identifiant de définition de service d'autorisation d'accès sont sélectionnés en premier, puis l'intensité de signal est mesurée pour ces canaux sélectionnés aux périodes prédéterminées et le système d'accès est déterminé en fonction du résultat de la mesure.

12. Procédé selon la revendication 1,
**caractérisé en ce que** lors de l'étape de modification d'accès, pour la commutation du système d'accès depuis le réseau local sans fil vers le réseau téléphonique mobile, la valeur d'intensité du signal du réseau local sans fil pour démarrer l'accès au réseau téléphonique mobile est définie suffisamment haut afin que l'accès au réseau local sans fil ne soit pas déconnecté tant que l'appel n'est pas configuré correctement dans le réseau téléphonique mobile.

13. Procédé selon la revendication 1,
**caractérisé en ce que** pendant l'étape de modification d'accès, pour la commutation du système d'accès depuis le réseau local sans fil vers le réseau téléphonique mobile, la transmission/réception des données est réalisée en continu par l'intermédiaire du réseau local sans fil jusqu'à ce qu'une procédure d'enregistrement du mobile IP soit terminée dans le réseau téléphonique mobile, afin d'éviter la déconnexion des données pendant le service d'itinérance.

14. Procédé selon la revendication 1,
**caractérisé en ce que** pendant l'étape de modification d'accès, pour la commutation du système d'accès depuis le réseau téléphonique mobile vers le réseau local sans fil, la liaison avec le réseau téléphonique mobile est déconnectée après que la procédure en rapport avec le mobile IP dans le réseau local sans fil est terminée.

15. Procédé selon la revendication 1,
**caractérisé en ce que** dans l'étape de décision d'accès initial, le terminal sélectionne le réseau local sans fil en tant que système initial pour l'accès lorsque la valeur d'intensité de signal du canal du réseau local sans fil, mesurée lors de l'étape de mesure de signal, est supérieure à la valeur de référence prédéterminée.

16. Procédé selon la revendication 1,
**caractérisé en ce que** pendant l'étape de décision d'accès initial, le terminal sélectionne le réseau téléphonique mobile en tant que système initial pour l'accès lorsqu'il n'existe aucun point d'accès du réseau local sans fil possédant un identifiant de définition de service d'autorisation d'accès ou que toutes les valeurs d'intensité de signal par les points d'accès du réseau local sans fil sont inférieures à la valeur de référence prédéterminée.
